# EUROPEAN PATENT APPLICATION

(11) **EP 4 730 549 A1**
(43) Date of publication of application: **22.04.2026**
(21) Application number: 24881025.1
(22) Date of filing: 31.05.2024
(51) Int. Cl.: H01M 50/538, H01M 10/0587, H01M 4/13

(54) **ELECTRODE ASSEMBLY AND PROCESSING METHOD, BATTERY CELL, BATTERY, AND ELECTRICAL DEVICE**

(30) Priority: 27.10.2023 CN 202311413111
(71) Applicant: Contemporary Amperex Technology Co., Limited, Ningde, Fujian 352100 (CN)
(72) Inventor: HUANG, Biao, Ningde, Fujian 352100 (CN)
(74) Representative: Kraus & Lederer PartGmbB
(86) International application number: PCT/CN2024/096775
(87) International publication number: WO 2025/086646

(57) **Abstract**

An electrode assembly (3) and a processing method, a battery cell (2), a battery (100), and an electrical apparatus are provided, which belong to the technical field of batteries. The electrode assembly (3) comprises an active material coating portion (31) and a tab portion (32) connected to the active material coating portion (31); the tab portion (32) includes a first lamination portion (321) and a second lamination portion (322) which are arranged in a connection manner; the first lamination portion (321) is formed by connecting an overlapping area (Z1) of laminated multi-layer tab sheets (320); and the second lamination portion (322) is formed by bending, in a direction approaching the first lamination portion (321), a first portion (3221) in an offset area (Z2) of the laminated multi-layer tab sheets (320) towards a remaining second portion (3222), and then laminating and connecting same together.

## Description

### CROSS-REFERENCE TO RELATED APPLICATIONS

The present application claims the priority of the Chinese patent application with the application number 202311413111.0 and filed by China Patent Office on October 27, 2023, the entire contents of which are incorporated herein by reference.

### TECHNICAL FIELD

The present application relates to the technical field of batteries, and specifically relates to an electrode assembly and a processing method, a battery cell, a battery and an electrical apparatus.

### BACKGROUND

In recent years, new energy vehicles have made significant advancements. In the field of electric vehicles, power batteries, as the sources of power for electric vehicles, play an irreplaceable important role. The power batteries include several battery cells. However, the battery cells need improvement in both performance and manufacturability.

### SUMMARY

The embodiments of the present application provide an electrode assembly and a processing method, a battery cell, a battery, and an electrical apparatus, aiming to improve the usability and manufacturability of the battery cell.

In a first aspect, an embodiment of the present application provides an electrode assembly, which includes: an active material coating portion and a tab portion connected to the active material coating portion, in which, the tab portion includes a first lamination portion and a second lamination portion which are arranged in a connection manner; the first lamination portion is formed by connecting overlapping areas of laminated multi-layer tab sheets; and the second lamination portion is formed by bending, in a direction approaching the first lamination portion, a first portion in an offset area of the laminated multi-layer tab sheets towards a remaining second portion, and then laminating and connecting same together.

In the above technical solution, the offset area of the multi-layer tab sheets is reused by laminating and connecting after bending, which reduces the adverse effects of the offset area of the multi-layer tab sheets on subsequent procedures, increases an electric connection area of the tab portion and a terminal post and improves the overcurrent capacity, thereby improving the usability of the battery cell. Furthermore, the procedure and time for adjusting the position of a cutter in real time are omitted, which is conducive to improving the processing efficiency of the electrode assembly, thus meeting the requirement of takt time of a high-speed mass production line; and moreover, it is conducive to reducing material waste and improving the material utilization rate of the tab sheets, thereby facilitating improvement of the manufacturability of the battery cell.

In some embodiments, a crease of the second lamination portion is parallel to the outer edge of the corresponding side of the tab sheet.

In the above technical solution, the crease of the second lamination portion is parallel to the outer edge of the corresponding side of the tab sheet, which is conducive to increasing an overlapping area of the first portion and the second portion in the second lamination portion as much as possible, thereby increasing an available area of the second lamination portion, increasing the electric connection area of the tab portion and the terminal post, and further improving the overcurrent efficiency.

In some embodiments, the tab portion is formed into a trapezoidal structure of which the lower bottom is connected to the active material coating portion.

In the above technical solution, the tab portion is processed into the trapezoidal structure of which the lower bottom is connected to the active material coating portion, which is conducive to improving the connection reliability of the tab portion and the active material coating portion, and improving the conductive reliability. In addition, when the crease of the second lamination portion is parallel to the outer edge of the corresponding side of the tab sheets and the tab portion is formed into the trapezoidal structure of which the lower bottom is connected to the active material coating portion, the offset area of the multi-layer tab sheets is also trapezoidal before being bent, namely, each tab sheet is a trapezoidal sheet body, which makes the rigidity of the tab sheet better and greatly prevents the tab sheet from bending and warping in the processes of winding, rolling and the like, and the multi-layer tab sheets can be laminated more tightly.

In some embodiments, the edge, close to the active material coating portion, of the first portion is a first edge; the edge, close to the active material coating portion, of the second portion is a second edge; there is a height difference between the first edge and the second edge; and the first edge is located at the side, far away from the active material coating portion, of the second edge.

In the above technical solution, there is the height difference between the first edge and the second edge, and the first edge is located on the side, far away from the active material coating portion, of the second edge, which greatly relieves the problems of short circuit and the like caused by reverse insertion of the bent first portion into the active material coating portion, thereby improving the reliability of the battery cell.

In some embodiments, the height difference between the first edge and the second edge is 0.8-3 mm.

In the above technical solution, the problems of short circuit and the like caused by reverse insertion of the bent first portion into the active material coating portion can be further relieved, and moreover, the problem that a part, protruding out of an electrode plate body, of a separator is punched as a part, close to the active material coating portion, of the first portion is punched can be relieved.

In some embodiments, the maximum height difference between a third edge, far away from the active material coating portion, of the first portion and a fourth edge, far away from the active material coating portion, of the second portion does not exceed 2 mm.

In the above technical solution, the maximum spacing in the height direction of the trapezoid is smaller than or equal to 2 mm, thus the overlapping area of the first portion and the second portion can be larger and closer to the upper bottom of the trapezoidal tab portion, which is conducive to welding the tab portion and the terminal post or an adapter plate, facilitates to obtain a larger weld mark area, and is conducive to improving the overcurrent efficiency.

In some embodiments, the tab portion extends out of a first end portion of the active material coating portion; the first lamination portion and the second lamination portion are arranged along a length direction of the first end portion; and the first portion is as long as the second portion in the length direction of the first end portion.

In the above technical solution, the first portion and the second portion after being bent may have a larger overlapping area, so that the second lamination portion may have a larger available area for welding with the terminal post or the adapter plate, which is conducive to increasing a weld mark area, and further improving the overcurrent efficiency.

In some embodiments, the second lamination portions are arranged on both sides of the first lamination portion.

In the above technical solution, the available area of the tab portion can be further increased, which is conducive to further increasing the connection area of the tab portion and the terminal post, thereby improving the overcurrent efficiency, and further reducing the material waste of the tab portion.

In some embodiments, a thickness of the second portion is in a decreasing trend along a direction far away from the first lamination portion, and a thickness of the first portion is in an increasing trend along a direction far away from the first lamination portion.

In the above technical solution, the first portion and the second portion after being laminated realize thickness complementation, namely, a thin area of the first portion and a thick area of the second portion are overlapped, and a thick area of the first portion and a thin area of the second portion are overlapped, so that the offset area can be bent and laminated to make the area with a small thickness bend to be overlapped with the area with large thickness so as to realize thickness compensation; and therefore, the offset area can be transformed into a form of being approximately equal in thickness, which is conducive to improving a welding area of the tab portion and the terminal post or the adapter plate.

In some embodiments, the first portion is bent and laminated on the side of the second portion where the surface is in stepped change.

In the above technical solution, the second lamination portion consisting of the first portion and the second portion can be in a form of being complementary in inner thickness and smooth and flat in external part, which facilitates the pre-welding connection of multi-layer tab sheets in the second lamination portion, and facilitates the subsequent utilization of the second lamination portion, for example, facilitating assembling of the tab portion and the terminal post, as well as facilitating the welding of the tab portion and the terminal post or the adapter plate.

In some embodiments, two outer-layer tab sheets in a thickness direction of the second lamination portion are arranged at the same layer with two outer-layer tab sheets in the thickness direction of the first lamination portion.

In the above technical solution, the whole outer surface of the tab portion can be more flat, which facilitates the pre-welding connection of the multi-layer tab sheets in the tab portion, and is conducive to the subsequent utilization of the tab portion, for example, facilitating the assembling of the tab portion and the terminal post, as well as facilitating the welding of the tab portion and the terminal post or the adapter plate.

In some embodiments, the bent parts of the bent multi-layer tab sheets in the second lamination portion and the unbent multi-layer tab sheets are arranged in a layer-by-layer corresponding manner.

In the above technical solution, a thickness of the second lamination portion consisting of the first portion and the second portion is more uniform, which is more conducive to the pre-welding connection of the multi-layer tab sheets in the second lamination portion, and is conducive to the subsequent utilization of the second lamination portion, for example, facilitating the assembling of the tab portion and the terminal posts, as well as facilitating the welding of the tab portion and the terminal post or the adapter plate.

In some embodiments, edges of two tab sheets arranged at the same layer in the second lamination portion are seamlessly spliced.

In the above technical solution, an air gap in the second lamination portion can be reduced, which is conducive to improving the pre-welding quality of the second lamination portion, as well as improving a welding yield of the tab portion and the terminal post or the adapter plate.

In some embodiments, the multi-layer tab sheets of the first portion and the second portion are connected in a welding manner.

In the above technical solution, the multi-layer tab sheets in the second lamination portion can be simply and effectively connected together, which facilitates subsequent processing or utilization of the tab portion, for example, facilitating subsequent integral welding of the tab portion, for another example, facilitating the assembling of the tab portion and the terminal post, as well as facilitating the welding of the tab portion and the terminal post or the adapter plate.

In some embodiments, the multi-layer tab sheets in the tab portion are connected by weld marks, with part of the weld marks located at the first lamination portion and the rest at the second lamination portion.

In the above technical solution, the tab sheets in the first lamination portion and the second lamination portion are connected by the weld marks, which makes the structural stability of the tab portion higher, facilitates subsequent utilization of the tab portion, for example, facilitating the assembling of the tab portion and the terminal post, as well as facilitating the welding of the tab portion and the terminal post or the adapter plate.

In the second aspect, an embodiment of the present application also provides a battery cell, which includes a case, a terminal post, and the electrode assembly in any solution above; the terminal post is arranged in the case; the active material coating portion is accommodated in the case; and the tab portion is electrically connected to the terminal post.

In the above technical solution, the electric connection area between the tab portion and the terminal post can be enlarged, thus improving the overcurrent capability, as well as improving the overall processing efficiency of the battery cell.

In some embodiments, a connecting portion is formed at the position, electrically connected to the terminal post, of the tab portion; and the connecting portion includes a part at the first lamination portion and a part at the second lamination portion.

In the above technical solution, the area of the connecting portion can be increased, which is conducive to improving the electric connection area between the tab portion and the terminal post, thereby improving the overcurrent efficiency.

In some embodiments, an accommodating groove is formed in the terminal post; and at least part of the tab portion is accommodated in the accommodating groove.

In the above technical solution, at least part of the tab portion is accommodated in the accommodating groove, and occupies the space in the accommodating groove, so that the space occupied by the tab portion in the case can be reduced, the space in the case is saved to accommodate the active material coating portion which has a larger size, which is conducive to improving an energy density of the battery cell, or reducing the size of the battery cell under the condition that the energy density of the battery cell is not changed.

In some embodiments, an accommodating cavity is formed in the case; the accommodating groove is opened towards a direction far away from the accommodating cavity; an interconnecting hole is formed in the terminal post, penetrates through a wall of the side, close to the accommodating cavity, of the accommodating groove, and communicates the accommodating cavity with the accommodating groove; and the tab portion is arranged in the interconnecting hole in a penetrating manner.

In the above technical solution, when injecting an electrolyte solution into the battery cell, the electrolyte solution can be injected into the accommodating groove and then flows towards the accommodating cavity through the interconnecting hole, in which, the accommodating groove can play a role in buffering the electrolyte solution so as to relive the problems of splashing, overflowing and the like of the electrolyte solution. Moreover, a side wall of the accommodating groove can prevent the electrolyte solution from splashing to a certain extent, thus reducing the pollution of the electrolyte solution to the outside, and facilitating quick injection of the electrolyte solution. Moreover, it is not needed to independently form a liquid injection channel in the case, so that it is not needed to specifically process the case, which is conducive to reducing the structural complexity and the processing difficulty of the case.

In some embodiments, the battery cell also includes a terminal post cover plate which covers the terminal post so as to cover an opening of the accommodating groove; a liquid injection hole communicating with the accommodating groove is formed in the terminal post cover plate; and a sealing structure for sealing the liquid injection hole is arranged on the terminal post cover plate.

In the above technical solution, when it is needed to inject the electrolyte solution into the battery cell, the sealing structure is not mounted at the liquid injection hole, or the sealing structure is in a state of opening the liquid injection hole, and the electrolyte solution can be injected into the accommodating groove through the liquid injection hole at this moment. After the electrolyte solution is injected, the sealing structure can be mounted at the liquid injection hole, or the sealing structure is switched to a state of closing the liquid injection hole, so that the liquid injection hole is sealed and closed to prevent the electrolyte solution from overflowing and prevent external foreign matters from entering the accommodating cavity through the liquid injection hole, thereby improving the reliability of the battery cell. Therefore, the liquid injection hole is processed in the terminal post cover plate, the size is relatively small and it is close to the outside, so that a liquid injection inlet can be easily reliably sealed by the sealing structure, the working reliability of the battery cell can be improved, and moreover, flexible and diversified design of the sealing structure can be realized.

In a third aspect, an embodiment of the present application also provides a battery including the battery cell in any solution above.

In the above technical solution, the performance of the battery cell provided by this embodiment of the present application is improved, so that the performance of the battery is improved.

In a fourth aspect, an embodiment of the present application also provides an electrical apparatus including the battery in any solution above.

In the above technical solution, the performance of the battery is improved, which is conducive to improving the power utilization performance of the electrical apparatus in working.

In a fifth aspect, an embodiment of the present application also provides a processing method for an electrode assembly, which includes the following steps: laminating multi-layer tab sheets connected to an active material coating portion and partially offsetting; bending, in a direction approaching an overlapping area of the multi-layer tab sheets in a tab portion, a first portion in an offset area of the multi-layer tab sheets towards remaining second portion in the offset area so as to laminate the first portion and the second portion; and connecting the laminated multi-layer tab sheets in the first portion and the second portion to form a second lamination portion, and connecting the multi-layer tab sheets in the overlapping area to form a first lamination part, the first lamination portion and the second lamination portion forming the tab portion of the electrode assembly.

In the above technical solution, the offset area of the multi-layer tab sheets is bent, laminated and connected for reuse, so that the adverse effects of the offset area of the multi-layer tab sheets on the subsequent assembling of the tab portion and the subsequent welding of the tab portion and the terminal post are relieved. Compared with a mode of completely cutting off the offset area, this solution is to increase an ultrasonic pre-welding area of the tab portion, thus increasing the weld mark area of the tab portion and the terminal post in welding, facilitating the improvement of the overcurrent capability, and improving the charging and discharging efficiency of the battery cell. Moreover, it is not needed to cut off the offset area of the tab portion by the cutter, which saves the time for adjusting the cutter in a cutting process and saves a procedure of introducing the cutter for synchronously cutting a plurality of tab portions of the electrode assembly, thereby improving the production takt and production efficiency of the electrode assembly. In addition, the offset area of the multi-layer tab sheets is reused, so that the material waste is reduced, and the material utilization rate of the tab portion is improved.

In some embodiments, the processing method also includes a step of: welding the multi-layer tab sheets in the first portion and the second portion which are laminated after being bent to form the second lamination portion.

In the above technical solution, the multi-layer tab sheets in the second lamination portion can be simply and effectively connected, which facilitates the subsequent processing or utilization of the tab portion, for example, facilitating the subsequent overall welding of the tab portion, for another example, facilitating the assembling of the tab portion and the terminal post, as well as facilitating the welding of the tab portion and the terminal post or the adapter plate.

In some embodiments, the processing method further includes a steps of: welding the tab portion, welding the multi-layer tab sheets in the overlapping area to form the first lamination portion, and connecting the first lamination portion and the second lamination portion by weld marks.

In the above technical solution, the tab sheets in the first lamination portion and the second lamination portion are connected by the weld marks, which makes the tab portion better in structural stability, thereby facilitating subsequent utilization of the tab portion, for example, facilitating the assembling of the tab portion and the terminal post, as well as facilitating the welding of the tab portion and the terminal post or the adapter plate.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural diagram of a battery cell provided by some embodiments of the present application;
FIG. 4 is a section view along a line A-A in FIG. 3.
FIG. 5 is a large enlarged diagram of a part B in FIG. 4;
FIG. 6 is a local schematic diagram of an electrode assembly provided by some embodiments of the present application;
FIG. 7 is a large enlarged diagram of a part C in FIG. 6;
FIG. 8 is a top-view schematic diagram of an electrode assembly provided by some embodiments of the present application;
FIG. 9 is a local enlarged diagram of a part D in FIG. 8;
FIG. 10 is a local schematic diagram of an electrode assembly provided by some embodiments of the present application;
FIG. 11 is a top-view schematic diagram of an electrode assembly in FIG. 10;
FIG. 12-FIG. 18 are schematic diagrams of processing of an electrode assembly in FIG. 10;
FIG. 19 is a schematic diagram of weld marks of a tab portion and a terminal post in related technology;
FIG. 20 is a schematic diagram of weld marks of a tab portion and a terminal post provided by some embodiments of the present application;
FIG. 21 is a local schematic diagram of an electrode assembly provided by some embodiments of the present application;
FIG. 22 is a local section view of an electrode assembly provided by some embodiments of the present application;
FIG. 23 is a schematic diagram of cooperation of a battery cell and a bus part provided by some embodiments of the present application;
FIG. 24 is a flowchart of steps of a processing method for an electrode cell provided by some embodiments of the present application; and
FIG. 25 is a flowchart of steps of a processing method for an electrode cell provided by some embodiments of the present application.

Reference numerals: vehicle 1000; first direction X; second direction Y; third direction Z; thickness direction W; battery 100; controller 200; motor 300; box body 101; first box body 1011; second box body 1012; battery cell 102; bus part 103; case 1; accommodating cavity 11; terminal post 2; accommodating groove 21; interconnecting hole 22; first weld mark M1; second weld mark M2; electrode assembly 3; active material coating portion 31; electrode plate body 311; first end portion 310; positive electrode plate body 3a; negative electrode plate body 3b; separator 312; first surface 313; second surface 314; tab portion 32; tab sheet 320; outer edge 3201; first lamination portion 321; second lamination portion 322; first portion 3221; first edge 32211; third edge 32212; second portion 3222; second edge 32221; fourth edge 32222; crease 3223; notch 3224; overlapping area Z1; offset area Z2; first area Z21; second area Z22; broken line L1; cutting path L2; cutting starting point P; connecting portion 4; terminal post cover plate 5; liquid injection hole 51; sealing structure 6; first welding head 2000; second welding head 3000; and cutter 4000.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of' means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the batteries mentioned in the present application may include a battery module or a battery pack. The battery module generally includes a plurality of battery cells. The battery pack generally includes a box body for packaging one or more battery cells or one or more battery modules. The case can improve the impact of liquids or other foreign substances on the charging or discharging of the battery cell.

The battery cell includes a case, an electrode assembly, and an electrolyte solution; and the case is configured to accommodate the electrode assembly and electrolyte solution. At least one electrode assembly is accommodated in the case, and is formed by a positive electrode plate, a negative electrode plate, and a separator; and the electrode assembly can be of a winding structure or a laminating structure. The battery cell mainly works by metal ions moving between the positive electrode plate and the negative electrode plate.

The positive electrode plate generally includes a positive electrode current collector, and a positive electrode active material layer which is directly or indirectly coated onto the positive electrode current collector; the positive electrode current collector without being coated with the positive electrode active material layer protrudes out of the positive electrode current collector coated with the positive electrode active material layer; and the positive electrode current collector without being coated with the positive electrode active material layer is used as a positive electrode tab sheet. Taking the lithium-ion battery as an example, the material of the positive electrode current collector may be aluminum, and the material of the positive electrode active material layer may be lithium cobalt oxide, lithium iron phosphate, ternary lithium or lithium manganate and the like.

The negative electrode plate generally includes a negative electrode current collector, and a negative electrode active material layer which is directly or indirectly coated onto the negative electrode current collector; the negative electrode current collector without being coated with the negative electrode active material layer protrudes out of the negative electrode current collector coated with the negative electrode active material layer; and the negative electrode current collector without being coated with the negative electrode active material layer is used as a negative electrode tab sheet. The material of the negative current collector may be copper, and the material of the negative electrode active material layer may be carbon or silicon and the like.

In order to ensure that high current can flow through without fusing; a plurality of positive electrode tab sheets are laminated to form a tab portion of a positive electrode, and a plurality of negative electrode tab sheets are laminated to form a tab portion of a negative electrode. A terminal post is arranged on the case, the tab portion of the positive electrode is electrically connected to the terminal post of the positive electrode, and the tab portion of the negative electrode is electrically connected to the terminal post of the negative electrode. The tab portion can be directly electrically connected to the terminal post by welding, or, the tab portion can be indirectly and electrically connected to the terminal post by an adapter plate, for example, the tab portion is welded with one end of the adapter plate, and the other end of the adapter plate is welded with the terminal post.

In the related technology, laminated multi-layer tab sheets are connected to form the tab portion in an ultrasonic welding manner, but due to the influence of processing, tolerance and the like, the laminated multi-layer tab sheets cannot be completely overlapped, and is subjected to offset, so during processing, it is needed to cut off the offset part, and then perform ultrasonic welding. However, because it is needed to cut off the offset part, which leads to decrease in overall length of the tab portion, when welding the tab portion with the terminal post, a length of a weld mark formed by welding the tab portion and the terminal post is small, an overcurrent area is small, an overcurrent efficiency is low, and consequently, the charging and discharging efficiency of the battery cell is influenced; and moreover, it is needed to adjust the working procedure and time for adjusting the position of a cutter in the cutting process, which influences the processing efficiency and the processing takt.

Therefore, an embodiment of the present application provides an electrode assembly; an overlapping area of the multi-layer tab sheets of the tab portion of the electrode assembly is connected to form a first lamination portion, the offset area of the multi-layer tab sheets is bent and laminated and is connected to form a second lamination portion, so that the offset area of the multi-layer tab sheets can be reused by laminating and connecting after being bent, the adverse effect of the offset area of the multi-layer tab sheets on the subsequent working procedures is solved, and moreover, an electric connection area between the tab portion and the terminal post is increased, which improves the overcurrent capacity; and the procedure and time for adjusting the position of the cutter in real time are omitted, which is conducive to improving the processing efficiency of the electrode assembly, thus meeting the requirement of takt time of a high-speed mass production line; and moreover, it is conducive to reducing material waste and improving the material utilization rate of the tab sheet.

An embodiment of the present application provides an electrical apparatus that uses a battery as a power source, and the electrical apparatus may be but not limited to a mobile phone, a tablet personal computer, a laptop computer, an electric toy, an electric tool, a battery car, an electric vehicle, a ship, a spacecraft, and the like. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

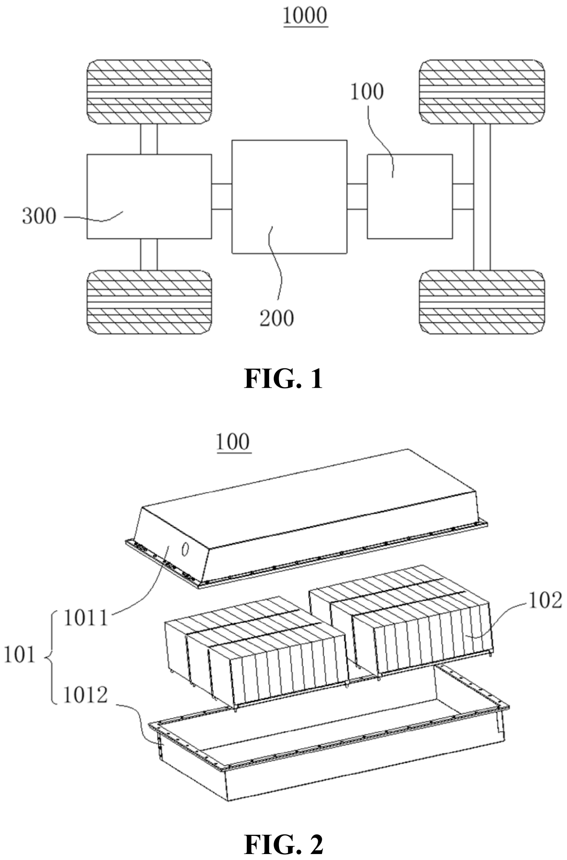

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is provided inside the vehicle 1000. The battery 100 may be provided at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

With reference to FIG. 2, FIG. 2 is an exploded structural diagram of a battery 100 provided by some embodiments of the present application. The battery 100 includes a box body 101 and a plurality of battery cells 102, and the battery cells 102 are accommodated in the box body 101. The box body 101 is configured to provide an assembling space for the battery cells 102, and the box body 101 can be of various structures. In some embodiments, the box body 101 can include a first box body 1011 and a second box body 1012 which are mutually covered and jointly define the assembling space for accommodating the battery cells 102. The second box body 1012 can be of a hollow structure with one end opened; the first box body 1011 can be of a plate-shaped structure, and covers the open side of the second box body 1012, so that the first box body 1011 and the second box body 1012 jointly define the assembling space; each of the first box body 1011 and the second box body 1012 can also be of a hollow structure with one side opened; and the open side of the first box body 1011 covers the open side of the second box body 1012. Definitely, the box body 101 formed by the first box body 1011 and the second box body 1012 can be in various shapes, such as a cylinder and a cuboid.

In the battery 100, the plurality of battery cells 102 can be connected in series or in parallel or in series-parallel, and the series-parallel connection refers to that the plurality of battery cells 102 are connected in series and in parallel. The plurality of battery cells 102 can be directly connected in series or in parallel or in series-parallel, and then the whole body formed by the plurality of battery cells 102 is accommodated in the box body 101; and definitely, the battery 100 can also be that the plurality of battery cells 102 are connected in series or in parallel or in series-parallel to obtain a battery module form, and then a plurality of battery modules are connected in series or in parallel or in series-parallel to form the whole body that is accommodated in the box body 101. The battery 100 can also include other structures, for example, the battery 100 can also include a bus part for realizing electric welding among the plurality of battery cells 102.

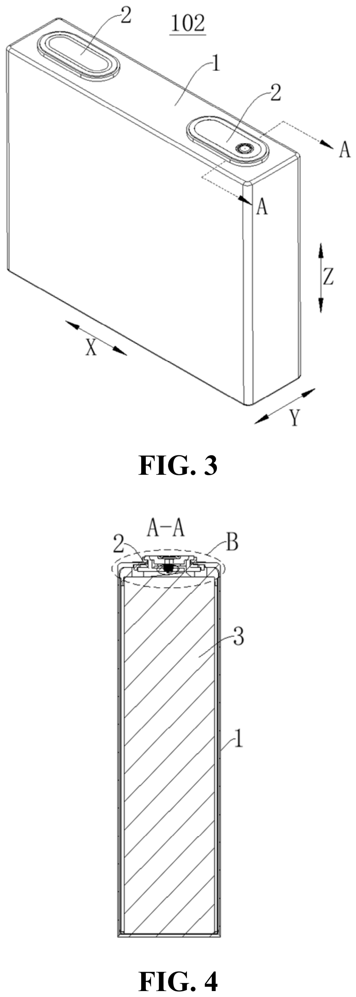

Each battery cell 102 can be a secondary battery or a primary battery, and can also be a lithium-sulfur battery, a sodium-ion battery or a magnesium-ion battery, but not limited thereto. The battery cell 102 can be cylindrical, flat, rectangular, or other shapes. For example, with reference to the embodiment shown in FIG. 3, a length direction of the battery cell 102 is a first direction X, a width direction of the battery cell 102 is a second direction Y, a height direction of the battery cell 102 is a third direction Z, and the first direction X, the second direction Y and the third direction Z are mutually perpendicular in pairs.

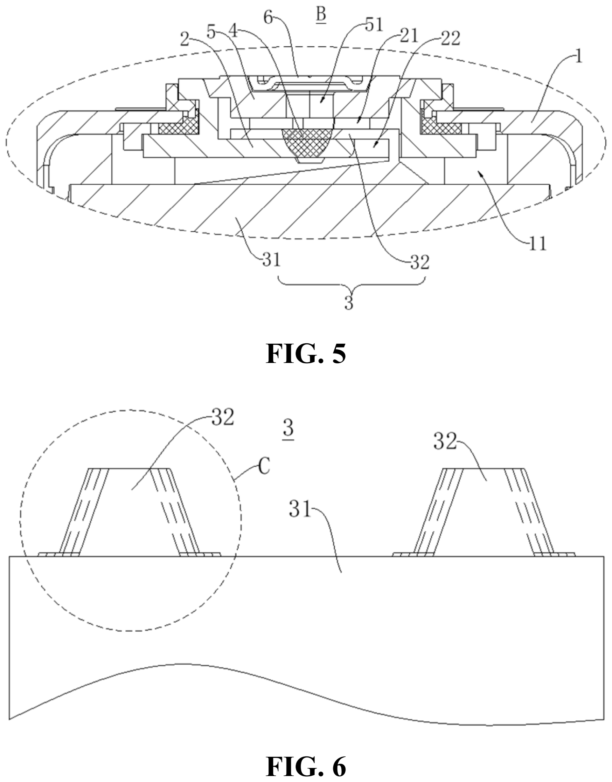

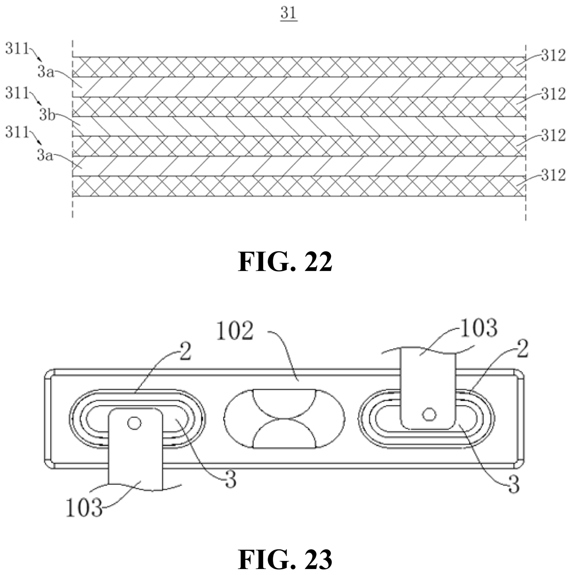

In some embodiments of the present application, as shown in FIG. 4 and FIG. 5, each battery cell 102 includes: a case 1, a terminal post 2 and an electrode assembly 3; the terminal post 2 is arranged in the case 1, the electrode assembly 3 includes an active material coating portion 31 arranged in the case 1, and a tab portion 32 connected to the active material coating portion 31; and the tab portion 32 is electrically connected to the terminal post 2. Exemplarily, an accommodating cavity 11 is formed in the case 1, the active material coating portion 31 is accommodated in the accommodating cavity 11, the terminal post 2 is arranged in the case 1 in a penetrating way, and the tab portion 32 and the terminal post 2 are directly welded or connected by an adapter plate, so that the tab portion 32 is electrically connected between the active material coating portion 31 and the terminal post 2. Exemplarily, in combination with FIG. 22, a part with a positive electrode active material layer (marked as a positive electrode plate body 3a) of the positive electrode plate, the separator 312, and a part with a negative electrode active material layer (marked as a negative electrode plate body 3b) of the negative electrode plate are sequentially laminated, and are wound or laminated to form the active material coating portion 31.

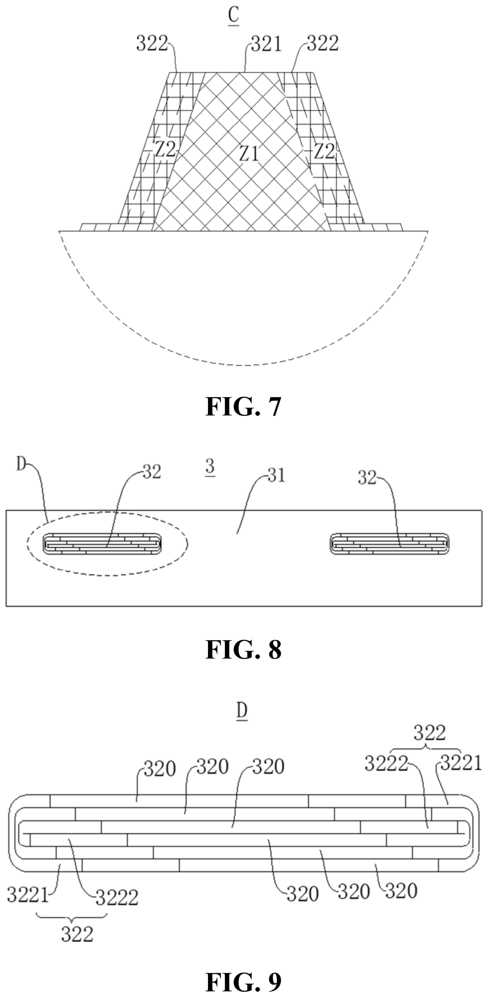

According to the electrode assembly 3 provided by some embodiments of the present application, as shown in FIG. 6 to FIG. 9, each tab portion 32 includes a first lamination portion 321 and a second lamination portion 322 which are connected; the first lamination portion 321 is formed by connecting an overlapping area Z1 of the laminated multi-layer tab sheets 320; and the second lamination portion 322 is formed by bending, in a direction approaching the first lamination portion 321, a first portion 3221 in an offset area Z2 of the laminated multi-layer tab sheets 320 towards a remaining second portion 3222 in the offset area Z2, and then laminating and connecting same together. That is, the multi-layer tab sheets 320 in the overlapping area Z1 are connected to form the first lamination portion 321, the first portion 3221 is bent to be laminated with the second portion 3222, and the multi-layer tab sheets 320 that are laminated after the offset area Z2 is bent are connected to form the second lamination portion 322. For example, an oblique grid shadow area in FIG. 7 shows the overlapping area Z1, and a positive grid shadow area shows the offset area Z2.

Each tab portion 32 is composed of the laminated multi-layer tab sheets 320, the part in which the projections of the multi-layer tab sheets 320 are completely overlapped forms the first lamination portion 321; the part in which the projection of the multi-layer tab sheet 320 is not completely overlapped forms the second lamination portion 322; and at least one layer of tab sheet 320 includes a part belonging to the first lamination portion 321 and a part belonging to the second lamination portion 322, so that the first lamination portion 321 and the second lamination portion 322 are arranged in a connection manner.

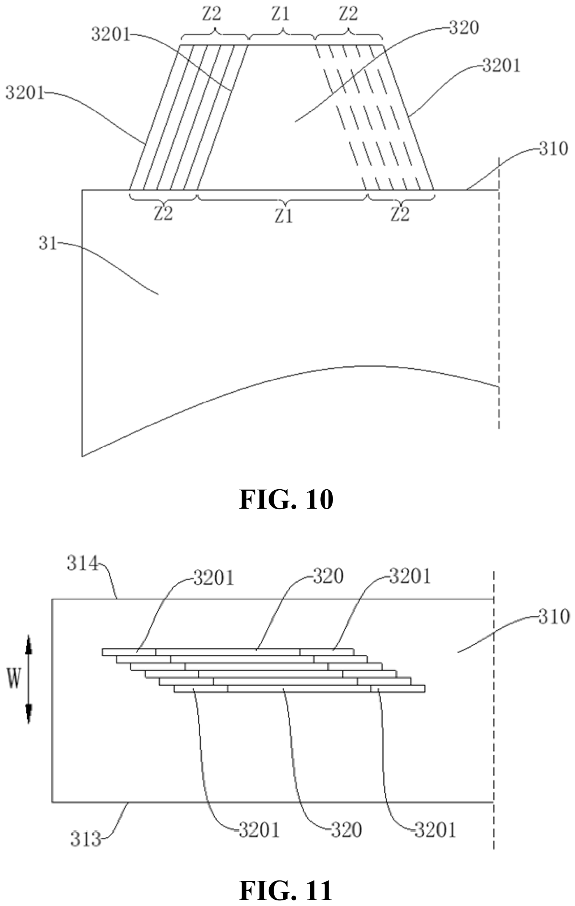

In combination with FIG. 10 and FIG. 11, due to the influence of factors such as manufacturing mode and manufacturing tolerance, it is difficult to align the laminated multi-layer tab sheets 320, causing the phenomenon of edge offsetting, therefore, on a projection plane vertical to a thickness direction W of the tab sheets 320, an area in which the projections of the multi-layer tab sheets 320 are completely overlapped is set as the overlapping area Z1, and an area in which the projections of the multi-layer tab sheets 320 are not completely overlapped is set as the offset area Z2.

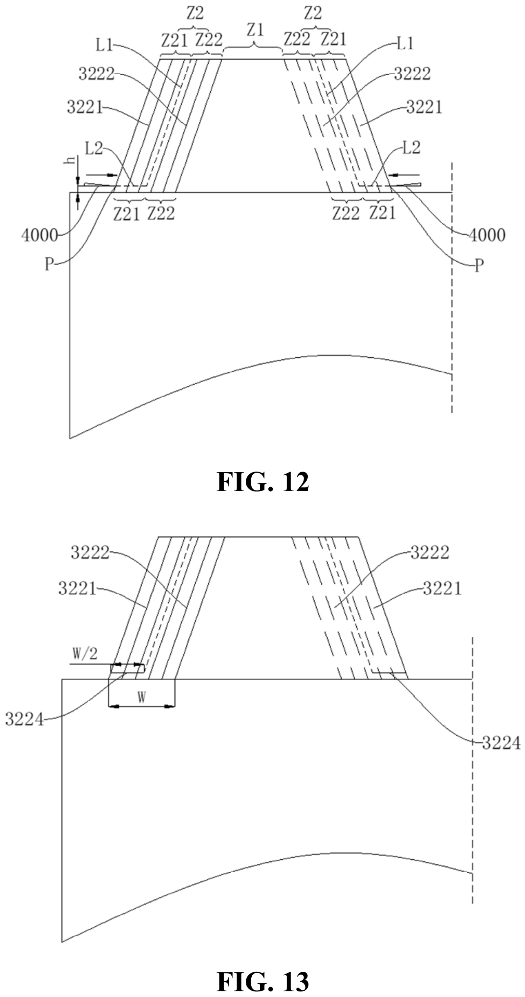

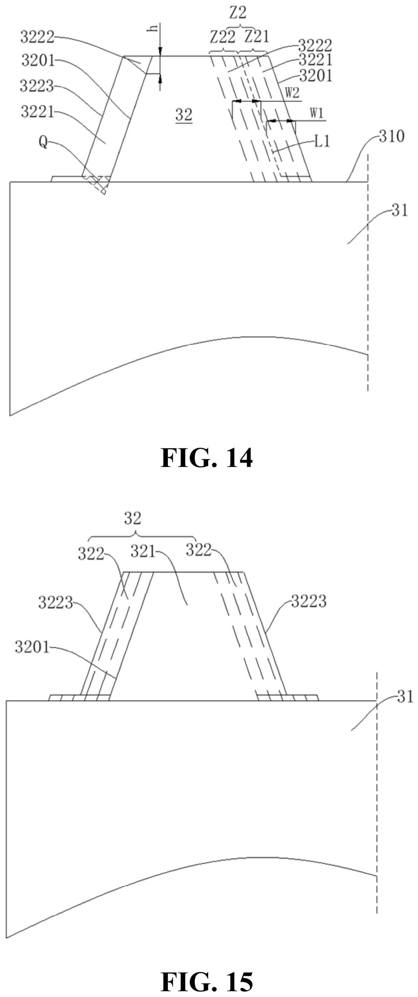

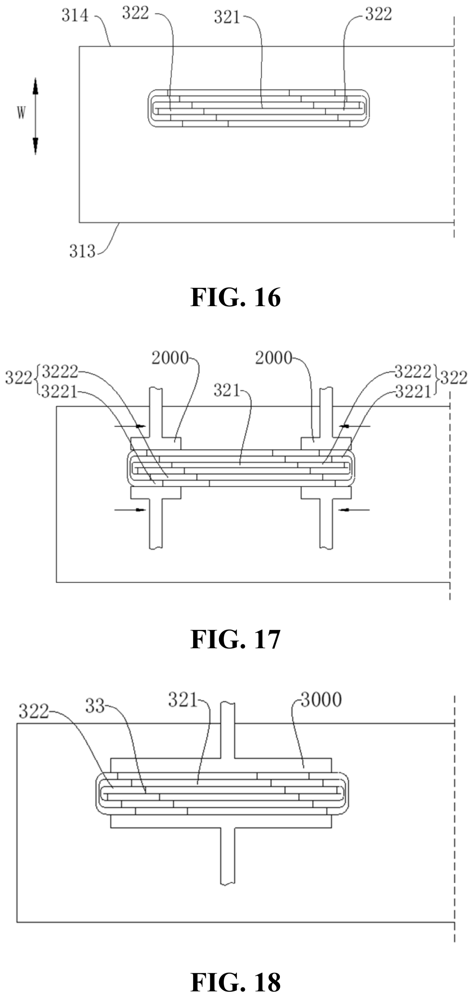

In combination with FIG. 12 and FIG. 13, the offset area Z2 is divided into a first area Z21 and a second area Z22, for example, a broken line L1 is set in the offset area Z2 and divides the offset area Z2 into the first area Z21 and the second area Z22, namely, the first area Z21 and the second area Z22 are respectively arranged on two sides of the broken line L1, in which, the tab sheets 320 in the first area Z21 form the first portion 3221, and the tab sheets 320 in the second area Z22 form the second portion 3222. In combination with FIG. 14 to FIG. 16, the tab sheets 320 in the offset area Z2 are bent along the broken line L1, so as to laminate the first portion 3221 on the second portion 3222. In combination with FIG. 17, the multi-layer tab sheets 320 laminated in the first portion 3221 and the second portion 3222 are connected to obtain the second lamination portion 322. In combination with FIG. 18, the multi-layer tab sheets 320 laminated in the overlapping area Z1 are connected to obtain the first lamination portion 321.

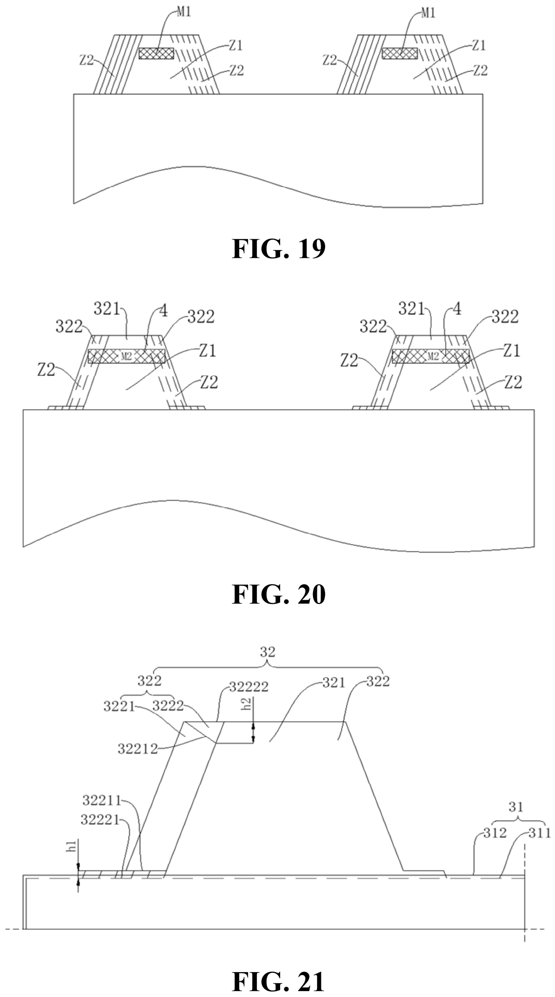

Specifically, the offset area of the laminated multi-layer tab sheets will lead to adverse effects on the subsequent assembling of the tab portion and the laser welding of the tab portion and the terminal post, so in the related technology, it is needed to completely cut off the offset area of the multi-layer tab sheets by the cutter in the production process of the electrode assembly, and only the overlapping area without offset is reserved on the multi-layer tab sheets; the multi-layer tab sheets in the only remaining overlapping area are subjected to ultrasonic pre-welding to form the tab portion after cutting; and then laser welding for the tab portion and the terminal post is carried out. However, in the process of cutting the tab sheets, it is needed to adjust the position of the cutter in real time so as to ensure the cutting quality; when the relative positions of a plurality of tab portions on the electrode assemblies with different specifications are different, it is also needed to adjust the position of the cutter for simultaneously cutting the plurality of tab portions on the electrode assemblies with different specifications, consequently, the processing efficiency is relatively low; moreover, a length of the cut tab portion is shortened, and a weld mark area after welding with the terminal post is relatively small (for example, in combination with FIG. 19, a weld mark formed by welding of the tab portion and the terminal post is a first weld mark M1 which is only located at the overlapping area), so the overcurrent capability is reduced, the charging and discharging efficiency of the battery cell is affected, and there is the problem of material waste of the tab sheets.

In this embodiment of the present application, the offset area Z2 of the multi-layer tab sheets 320 is bent, laminated and connected for reuse, which relieves adverse effect of the offset area Z2 of the multi-layer tab sheets 320 on the subsequent assembling of the tab portion 32 (such as penetrating the tab portion 32 through an interconnecting hole 22 in the terminal post 2) and the subsequent welding of the tab portion 32 and the terminal post 2 or the adapter plate. Compared with a mode of completely cutting off the offset area Z2, this mode is to increase an ultrasonic pre-welding area of the tab portion 32, which increases the electric connection area between the tab portion 32 and the terminal post 2 (for example, in combination with FIG. 20, the weld mark formed by welding of the tab portion 32 and the terminal post 2 is a second weld mark M2 which is located at the overlapping area Z1 and the offset area Z2), thereby improving the overcurrent capability, and improving the charging and discharging efficiency of the battery cell 102. Moreover, it is not needed to cut off the offset area Z2 of the tab portion 32 by the cutter, so the time for adjusting the cutter in the cutting process is saved; and moreover, it is not needed to introduce the process of adjusting the cutter for synchronously cutting the plurality of tab portions 32 of the electrode assembly 3, which is conducive to increasing production takt of the electrode assembly 3, and improving the production efficiency of the electrode assembly 3. In addition, the offset area Z2 of the multi-layer tab sheet 320 is reused, so that material waste is reduced and the material utilization rate of the tab portion 32 is improved.

In brief, according to the electrode assembly 3 provided by this embodiment of the present application, the offset area Z2 of the multi-layer tab sheets 320 is reused by laminating and connecting after being bent, which solves the adverse effects of the offset area Z2 of the multi-layer tab sheet 320 on subsequent procedures, and increases the electric connection area of the tab portion 32 and the terminal post 2, thereby improving the overcurrent capability; and the procedure and time for adjusting the position of the cutter in real time are omitted, which is conducive to improving the processing efficiency of the electrode assembly 3, thus meeting the requirement of takt time of a high-speed mass production line; and moreover, it is conducive to reducing material waste and improving the material utilization rate of the tab sheets 320.

In some embodiments of the present application, in combination with FIG. 14, a crease 3223 of the second lamination portion 322 is parallel to an outer edge 3201 of the corresponding side of the tab sheets 320. That is, the broken line L1 along which the offset area Z2 is bent is parallel to the outer edge 3201 of the corresponding side of the tab sheets 320.

For example, in combination with FIG. 10 and FIG. 11, after the multi-layer tab sheets 320 are laminated and before the offset area Z2 is not bent, the edge of the side, far away from the overlapping area Z1, of the tab sheet 320 in the offset area Z2 is the outer edge 3201 of the tab sheet 320. In combination with FIG. 12 to FIG. 15, the offset area Z2 is divided into a first area Z21 and a second area Z22 by the broken line L1; the tab sheet 320 in the offset area Z2 is bent along the broken line L1 so as to laminate the first portion 3221 and the second portion 3222, and the crease 3223 is formed at the broken line L1 after bending. In the figures, the crease 3223 formed after the offset area Z2 on the left side is bent is parallel to the outer edge 3201 of the left side of the tab sheet 320; and the crease 3223 formed after the offset area Z2 on the right side is bent is parallel to the outer edge 3201 of the right side of the tab sheet 320.

Therefore, the crease 3223 of the second lamination portion 322 is parallel to the outer edge 3201 of the corresponding side of the tab sheet 320, which is conducive to increasing the overlapping area of the first portion 3221 and the second portion 3222 in the second lamination portion 322 as much as possible, thereby increasing the available area of the second lamination portion 322, increasing the electrical connection area of the tab portion 32 and the terminal post 2, and further improving the overcurrent efficiency.

Definitely, the present application is not limited to above, for example, in other embodiments of the present application, it may also be needed to make the crease 3223 of the second lamination portion 322 not parallel to the outer edge 3201 of the corresponding side of the tab sheet 320, namely, the broken line L1 along which the offset area Z2 is bent is not parallel to the outer edge 3201 of the corresponding side of the tab sheet 320.

In some embodiments of the present application, as shown in FIG. 15, the tab portion 32 is formed into a trapezoidal structure of which a lower bottom is connected to the active material coating portion 31. That is, the tab portion 32 is trapezoidal, an edge (for example, a lower edge of the tab portion 32 shown in FIG. 15) of the side, close to the active material coating portion 31, of the tab portion 32 is a lower bottom of the trapezoid, an edge (for example, an upper edge of the tab portion 32 shown in FIG. 15) of the side, far away from the active material coating portion 31, of the tab portion 32 is an upper bottom of the trapezoid, and two waists of the tab portion 32 are connected between the upper bottom and the lower bottom; and the tab portion 32 can be constructed into an isosceles trapezoid or a non-isosceles trapezoid.

Therefore, processing the tab portion 32 into a trapezoidal structure with the lower bottom connected to the active material coating portion 31 is conducive to improving the connection reliability of the tab portion 32 and the active material coating portion 31, as well as improving the conductive reliability. Furthermore, when the crease 3223 of the second lamination portion 322 is parallel to the outer edge 3201 of the corresponding side of the tab sheet 320 and the tab portion 32 forms the trapezoidal structure with the lower bottom connected to the active material coating portion 31, the offset area Z2 of the multi-layer tab sheets 320 is trapezoidal before being bent, namely, each tab sheet 320 is a trapezoidal piece body, which makes the rigidity of the tab sheet 320 better and greatly prevents the tab sheet from bending and warping in the processes of winding, rolling and the like, and the multi-layer tab sheets 320 can be laminated more tightly.

Definitely, the present application is not limited to above, for example, in other embodiments of the present application, it may also be needed to process the tab sheets 320 or the tab portion 32 into other shapes, such as a rectangle and a parallelogram.

In some embodiments of the present application, as shown in FIG. 21, the edge, close to the active material coating portion 31, of the first portion 3221 is a first edge 32211, and the edge, close to the active material coating portion 31, of the second portion 3222 is a second edge 32221; there is a height difference h1 between the first edge 32211 and the second edge 32221, namely there is a spacing between the first edge 32211 and the second edge 32221 in the height direction of the trapezoid; and the first edge 32211 is located on the side, far away from the active material coating portion 31, of the second edge 32221.

For example, when the tab portion 32 is located above the active material coating portion 31, a lower edge of the first portion 3221 is the first edge 32211, a lower edge of the second portion 3222 is the second edge 32221, and the first edge 32211 is higher than the second edge 32221, so that the first edge 32211 is located on the side, far away from the active material coating portion 31, of the second edge 32221. The first edge 32211 of the first portion 3221 is located on the side, far away from the active material coating portion 31, of the second edge 32221 of the second portion 3222, which greatly relieves the problems of short circuit and the like caused by reverse insertion of the bent first portion 3221 into the active material coating portion 31, thereby improving the reliability of the battery cell 102.

For example, in combination with FIG. 12 to FIG. 15, in order to bend the offset area Z2 along the broken line L1, a notch 3224 is formed by punching at a position, close to the active material coating portion 31, of the first portion 3221, and then the first portion 3221 is bent along the broken line L1, so that the first portion 3221 is laminated on the second portion 3222. The tab sheets 320 are trapezoidal, and when the broken line L1 is parallel to the waist line of the trapezoid, and after the first portion 3221 is bent, the local part, close to the active material coating portion 31, of the first portion 3221 has the risk of being inversely inserted into the active material coating portion 31, so during punching, the local part (such as the area of a shadow Q in FIG. 14) close to the active material coating portion 31 of the first portion 3221 can be cut off, then the first portion 3221 is bent, and the first edge 32211 of the bent first portion 3221 is located on the side, far away from the active material coating portion 31, of the second edge 32221 of the second portion 3222, thereby relieving the problems of short circuit and the like caused by reverse insertion of the bent first portion 3221 into the active material coating portion 31.

In some embodiments of the present application, as shown in FIG. 21 and FIG. 22, the active material coating portion 31 includes an electrode plate body 311 and the separator 312 which are arranged in a laminated manner, and the lower bottom of the tab portion 32 is connected to the electrode plate body 311. The "electrode plate body 311" includes: the positive electrode plate body 3a and the negative electrode plate body 3b, in which, the positive electrode plate body 3a is a part having a positive electrode active material layer of the positive electrode plate, or a part coated with the positive electrode active material layer of the positive electrode current collector, and the negative electrode plate body 3b is a part having a negative electrode active material layer of the negative electrode plate, or a part coated with the negative electrode active material layer of the negative electrode current collector. The positive electrode plate body 3a and the negative electrode plate body 3b are alternately arranged in sequence, the separator 312 is clamped between the positive electrode plate body 3a and the negative electrode plate body 3b, and then the positive electrode plate body 3a, the separator 312 and the negative electrode plate body 3b are wound or laminated to form the active material coating portion 31. The lower bottom of the tab portion 32 of the trapezoidal positive electrode is connected to the positive electrode plate body 3a, and the lower bottom of the trapezoidal tab portion 32 of the negative electrode is connected to the negative electrode plate body 3b.

In combination with FIG. 21, the separator 312 protrudes out of the edge of the electrode plate body 311 in a direction approaching the tab portion 32, for example, when the tab portion 32 is located above the active material coating portion 31, the upper edge of the separator 312 is higher than the upper edge of the electrode plate body 311; and therefore, the separator 312 protrudes out of the edge of the electrode plate body 311 in the direction approaching the tab portion 32, which can effectively relieve the problem of short circuit and improve the reliability of the battery cell 102.

In some embodiments, when the separator 312 protrudes out of the edge of the electrode plate body 311 in the direction approaching the tab portion 32, the first edge 32211 is arranged at the side, far away from the active material coating portion 31, of the second edge 32221, and the height difference h1 between the first edge 32211 and the second edge 32221 is set to be 0.8-3 mm, that is, the spacing in the height direction of the trapezoid is 0.8-3 mm, for example, 0.8 mm, 0.9 mm, 1 mm, 1.1 mm, 1.2 mm, 1.3 mm, 1.4 mm, 1.5 mm, 1.8 mm, 2 mm, 2.5 mm, and 3 mm, and therefore, the problem that the part, protruding out of the electrode plate body 311, of the separator 312 is punched together when punching the local part, close to the active material coating part 31, of the first portion 3221 can be relieved.

In some embodiments of the present application, as shown in FIG. 21, the maximum height difference h2 between a third edge 32212, far away from the active material coating portion 31, of the first portion 3221 and a fourth edge 32222, far away from the active material coating portion 31, of the second portion 3222 does not exceed 2 mm, that is, the maximum spacing in the height direction of the trapezoid is smaller than or equal to 2 mm, for example, 2 mm, 1.9 mm, 1.8 mm, 1.7 mm, 1.6 mm, 1.5 mm, 1.4 mm, 1.3 mm, 1.2 mm, 1.1 mm, 0.8 mm, 0.6 mm, and 0.4 mm. Therefore, the overlapping area of the first portion 3221 and the second portion 3222 can be relatively large and can be relatively close to the upper bottom of the trapezoidal tab portion 32, which facilitates the welding of the tab portion 32 and the terminal post 2 or the adapter plate, and facilitates to obtain a larger weld mark area, thereby improving the overcurrent efficiency.

It is to be noted that because the tab sheet 320 is trapezoidal, when the broken line L1 is parallel to the waist line of the trapezoid, and after the first portion 3221 is bent, the third edge 32212, far away from the active material coating portion 31, of the first portion 3221 is located on the side, close to the active material coating portion 31, of the fourth edge 32222, far away from the active material coating portion 31, of the second portion 3222; and when the height difference between the third edge 32212 and the fourth edge 32222 is relatively large, the overlapping area of the first portion 3221 and the second portion 3222 is relatively far away from the upper bottom of the tab portion 32, so that the weld mark of the tab portion 32 and the terminal post 2 or the adapter plate needs to be close to a direction approaching the lower bottom of the tab portion 32, which does not facilitate the welding of the tab portion 32 and the terminal post 2 or the adapter plate; and therefore, when designing the shape of the tab sheet 320 and the position of the broken line L1 of the offset area Z2, the position of the third edge 32212 after the first portion 3221 is bent can be considered, and the maximum height difference h2 between the third edge 32212 and the upper bottom of the tab portion 32 does not exceed 2mm, thus facilitating the welding of the tab portion 32 and the terminal post 2 or the adapter plate.

In some embodiments of the present application, as shown in FIG. 14, the tab portion 32 extends out from a first end portion 310 of the active material coating portion 31, the first lamination portion 321 and the second lamination portion 322 are arranged along a length direction of the first end portion 310, and in the length direction of the first end portion 310, the length W1 of the first portion 3221 is equal to the length W2 of the second portion 3222. Therefore, the first portion 3221 and the second portion 3222 after being bent may have a larger overlapping area, so that the second lamination portion 322 may have a larger available area for welding with the terminal post 2 or the adapter plate, which is conducive to increasing the weld mark area, as well as improving the overcurrent efficiency. For example, when setting the broken line L1, the broken line L1 can be arranged at a position half of a length of the offset area Z2, thus the offset area Z2 can be folded in half, the first portion 3221 and the second portion 3222 after being bent can have a larger overlapping area, the second lamination portion 322 can have a larger available area for welding with the terminal post 2 or the adapter plate, which is conducive to increasing the weld mark area, as well as improving the overcurrent efficiency.

It is to be noted that the first end portion 310 is not limited to the end portion of the active material coating portion 31, for example, when the active material coating portion 31 is in a winding form, at least one of two end portions on a winding axis is the first end portion 310, and the tab portion 32 of the positive electrode and the tab portion 32 of the negative electrode can extend out from the same end portion or respectively extend out from the two end portions in opposite directions, which is not limited in the present application.

In some embodiments of the present application, as shown in FIG. 14 to FIG. 16, the second lamination portions 322 are arranged on both sides of the first lamination portion 321. Specifically, the tab portion 32 extends out from the first end portion 310 of the active material coating portion 31; and the overlapping area Z1 and the offset area Z2 are arranged along the length direction of the first end portion 310, and in the length direction of the first end portion 310, the offset areas Z2 are arranged on both sides of the overlapping area Z1 and are not cut and are respectively bent to form the second lamination portions 322, so that the available area of the tab portion 32 can be further increased, and it is conducive to increasing the electric connection area of the tab portion 32 and the terminal post 2, further improving the overcurrent efficiency, and further reducing the material waste of the tab portion 32.

In some embodiments of the present application, as shown in FIG. 10 to FIG. 16, a thickness of the second portion 3222 is in a decreasing trend along a direction far away from the first lamination portion 321, and the thickness of the first portion 3221 is in an increasing trend along a direction far away from the first lamination portion 321. Therefore, the first portion 3221 and the second portion 3222 after being laminated realize thickness complementation, namely, a thin area of the first portion 3221 and a thick area of the second portion 3222 are overlapped, the thick area of the first portion 3221 and the thin area of the second portion 3222 are overlapped, then the offset area Z2 can be bent and laminated to make an area with small thickness bend to be overlapped with an area with large thickness so as to realize thickness compensation, thus the offset area Z2 can be transformed into a form of being approximately equal in thickness, which is conducive to improving the welding area of the tab portion 32 and the terminal post 2 or the adapter plate.

Exemplarily, the tab portion 32 extends out of the first end portion 310 of the active material coating portion 31, the centers of the multi-layer tab sheets 320 in the tab portion 32 are sequentially offset along the length direction of the first end portion 310 so that the overlapping area Z1 and the offset area Z2 are arranged along the length direction of the first end portion 310; and moreover, in the length direction of the first end portion 310, the offset areas Z2 are arranged on both sides of the overlapping area Z1, the multi-layer tab sheets 320 of the offset areas Z2 are sequentially offset before the offset areas Z2 are not bent so that the tab portion 32 at this position is in a form that the thickness gradually decreases in the direction far away from the overlapping area Z1, and therefore, half of the offset area Z2 far away from the overlapping area Z1 is bent to the remaining half, which makes a relatively thin part overlap with a relatively thick part, thereby achieving thickness compensation.

In some embodiments of the present application, as shown in FIG. 10 to FIG. 16, when the thickness of the second portion 3222 is in a decreasing trend along a direction far away from the first lamination portion 321, and the thickness of the first portion 3221 is in an increasing trend along a direction far away from the first lamination portion 321, the first portion 3221 is bent and laminated at the side of the second portion 3222 where the surface is in stepped change, that is, the first portion 3221 and the second portion 3222 are laminated face to face through the surface, in stepped change, of the first portion 3221 and the surface, in stepped change, of the second portion 3222, so that the second lamination portion 322 consisting of the first portion 3221 and the second portion 3222 can be in a form of being complementary in inner thickness and smooth and flat in external part, which facilitates the pre-welding connection of the multi-layer tab sheets 320 in the second lamination portion 322, and facilitates the subsequent utilization of the second lamination portion 322, for example, facilitating the assembling of the tab portion 32 and the terminal post 2, as well as facilitating the welding of the tab portion 32 and the terminal post 2 or the adapter plate.

For example, in combination with FIG. 10 and FIG. 11, when the centers of the multi-layer tab sheets 320 in the tab portion 32 are sequentially offset along the length direction of the first end portion 310, the offset areas Z2 are respectively arranged on both sides of the overlapping area Z1 in the length direction of the first end portion 310, and the surfaces, in stepped change, of the multi-layer tab sheets 320 in the offset areas Z2 on the two sides are opposite, for example, the surfaces of two sides of the active material coating portion 31 in the thickness direction W are respectively a first surface 313 and a second surface 314; and the surfaces of the sides, facing the first surface 313, of the multi-layer tab sheets 320 in the offset area Z2 at the left of the overlapping area Z1 are in stepped change, and the surfaces of the sides, facing the second surface 314, of the multi-layer tab sheets 320 in the offset area Z2 at the right of the overlapping area Z1 are in stepped change. In combination with FIG. 12 to FIG. 16, the first portions 3221 in the offset areas Z2 on two sides can be bent in opposite directions, so that the first portion 3221 on each side is bent and laminated at the side of the second portion 3222 where the surface is in stepped change at the same side, for example, the first portion 3221 of the offset area Z2 at the left is bent in a direction approaching the first surface 313, and the first portion 3221 of the offset area Z2 at the right is bent in a direction approaching the second surface 314, so that the offset areas Z2 on two sides respectively form the second lamination portion 322.

It is to be understood that when the active material coating portion 31 is in a winding form, it is easier to realize a form that the centers of the multi-layer tab sheets 320 in the tab portion 32 are sequentially offset along the length direction of the first end portion 310.

Definitely, the present application is not limited to above, for example, in other embodiments of the present application, the first portion 3221 and the second portion 3222 can also be bent and laminated in a manner that two parts of the longest tab sheet 320 in the offset area Z2 are oppositely folded, or, the first portion 3221 and the second portion 3222 are laminated in a manner of being far away from each other through the surface, in stepped change, of the first portion 3221 and the surface, in stepped change, of the second portion 3222, thus realizing flexible arrangement.

In some embodiments of the present application, as shown in FIG. 10 to FIG. 16, two outer-layer tab sheets 320 in the thickness direction W of the second lamination portion 322 are arranged on the same layer with two outer-layer tab sheets 320 in the thickness direction W of the first lamination portion 321. For example, the surfaces of two sides in the thickness direction W of the active material coating portion 31 are the first surface 313 and the second surface 314 respectively; one layer of tab sheet 320, close to the first surface 313, in the second lamination portion 322 and one layer of tab sheet 320, close to the first surface 313, in the first lamination portion 321 are arranged on the same layer; and one layer of tab sheet 320, close to the second surface 314, in the second lamination portion 322 and one layer of tab sheet 320, close to the second surface 314, in the first lamination portion 321 are arranged on the same layer. Therefore, the whole outer surface of the tab portion 32 can be more flat, which facilitates the pre-welding connection of the multi-layer tab sheet 320 in the tab portion 32, and is conducive to the subsequent utilization of the tab portion 32, for example, facilitating the assembling of the tab portion 32 and the terminal post 2, as well as facilitating the welding of the tab portion 32 and the terminal post 2 or the adapter plate.

Definitely, the present application is not limited to above, in other embodiments of the present application, the outer-layer tab sheet 320 in the thickness direction W of the second lamination portion 322 can be laminated on the outer-layer tab sheet 320 at the same side in the thickness direction W of the first lamination portion 321, etc.

In some embodiments of the present application, as shown in FIG. 10 to FIG. 16, the bent parts of the bent multi-layer tab sheets 320 in the second lamination portion 322 and the unbent multi-layer tab sheets 320 are arranged in a layer-by-layer corresponding manner. Therefore, the thickness of the second lamination portion 322 consisting of the first portion 3221 and the second portion 3222 is more uniform, which is more conducive to the pre-welding connection of the multi-layer tab sheets 320 in the second lamination portion 322, and is conducive to the subsequent utilization of the second lamination portion 322, for example, facilitating the assembling of the tab portion 32 and the terminal post 2, as well as facilitating the welding of the tab portion 32 and the terminal post 2 or the adapter plate.

For example, the surfaces of two sides in the thickness direction W of the active material coating portion 31 are the first surface 313 and the second surface 314 respectively, the multi-layer tab sheets 320 in the tab portion 32 include a first layer to an Nth layer along a direction from the second surface 314 to the first surface 313, in which, the tab sheets 320 on each layer from the first layer to an (X-1)th layer in the second lamination portion 322 are unbent, the tab sheets 320 on each layer from an Xth layer to the Nth layer are bent, and a part of the tab sheets 320 on each layer from the first layer to the Nth layer forms the second portion 3222, and the rest part of the tab sheets 320 on each layer from the X layer to the Nth layer forms the first portion 3221; the first portion 3221 is bent onto the laminated second portion 3222, the unbent first layer in the second lamination portion 322 is on the same layer as the bent part at the Nth layer, the unbent second layer in the second lamination portion 322 is on the same layer as the bent part in the (N-1)th layer, the unbent third layer in the second lamination portion 322 is on the same layer as the bent part in the (N-2)th layer, and so on. It is to be understood that the tab sheet 320 on the first layer can only have the edge belonging to the second lamination portion 322, or, the second lamination portion 322 only includes the edge of the tab sheet 320 on the first layer.

For example, in examples shown in FIG. 10 to FIG. 16, N is 6, X is 4, the tab sheets 320 on each layer from the first layer to the third layer in the second lamination portion 322 are unbent, and the tab sheets 320 on each layer from the fourth layer to the sixth layer are bent; in the offset area Z2 at the right of the overlapping area Z1, a part of the tab sheet 320 on each layer from the first layer to the sixth layer forms the second portion 3222, and the rest part of the tab sheet 320 on each layer from the fourth layer to the sixth layer forms the first portion 3221; the first portion 3221 is bent to the laminated second portion 3222, the unbent first layer in the second lamination 322 is on the same layer as the bent part on the sixth layer, the unbent second layer 2 in the second lamination portion 322 is on the same layer as the bent part of the fifth layer, and the unbent third layer in the second lamination portion 322 is on the same layer as the bent part of the fourth layer.

In some embodiments, the edges of two tab sheets 320 arranged on the same layer in the second lamination portion 322 are seamlessly spliced. Therefore, an air gap in the second lamination portion 322 can be reduced, which is conducive to improving the pre-welding quality of the second lamination portion 322, as well as improving the welding yield of the tab portion 32 and the terminal post 2 or the adapter plate. For example, as shown in FIG. 10 to FIG. 16, in the offset area Z2 at the right of the overlapping area Z1, a right edge of the tab sheet 320 on the first layer and a left edge of the bent part of the tab sheet 320 on the sixth layer are seamlessly spliced, a right edge of the tab sheet 320 on the second layer and a left edge of the bent part of the tab sheet 320 on the fifth layer are seamlessly spliced, and a right edge of the tab sheet 320 on the third layer and a left edge of the bent part of the tab sheet 320 on the fourth layer are seamlessly spliced.

Definitely, the present application is not limited to above, in other embodiments of the present application, the edges of two tab sheets 320 arranged on the same layer in the second lamination portion 322 can be arranged in a clearance fit manner, or the bent parts of the bent multi-layer tab sheets 320 in the second lamination portion 322 are arranged in a manner of being laminated with the non-bent multi-layer tab sheets 320 on different layers.

In some embodiments of the present application, the multi-layer tab sheets 320 of the first portion 3221 and the second portion 3222 are connected in a welding manner. For example, as shown in FIG. 17, after the offset area Z2 is bent, a smaller ultrasonic welding head (such as a first welding head 2000 shown in FIG. 17) can be adopted to compact the offset area Z2, so that the multi-layer tab sheets 320 in the second lamination portion 322 can be simply and effectively connected together, which facilitates the subsequent processing or utilization of the tab portion 32, for example, facilitating the subsequent overall welding of the tab portion 32, for another example, facilitating the assembling of the tab portion 32 and the terminal post 2, as well as facilitating the welding of the tab portion 32 and the terminal post 2 or the adapter plate. Definitely, the welding of the multi-layer tab sheets 320 in the second lamination portion 322 is not limited to the ultrasonic welding mode, for example, the welding mode can be replaced by other modes, such as molecular diffusion welding and resistance welding.

In some embodiments of the present application, the multi-layer tab sheets 320 in the tab portion 32 are connected by the weld mark, part of the weld mark is located at the first lamination portion 321, and the rest part is at the second lamination portion 322. Therefore, the tab sheets 320 of the first lamination portion 321 and the second lamination portion 322 are connected by the weld marks, which makes the tab portion 32 better in structural stability, thus facilitating the subsequent utilization of the tab portion 32, for example, facilitating the assembling of the tab portion 32 and the terminal post 2, as well as facilitating the welding of the tab portion 32 and the terminal post 2 or the adapter plate. It is to be noted that the welding of the multi-layer tab sheets 320 in the tab portion 32 can be but not limited to ultrasonic welding, for example, the welding mode can be replaced by other modes, such as molecular diffusion welding and resistance welding.

For example, as shown in FIG. 17, when a smaller ultrasonic welding head is adopted to compact the offset area Z2, the ultrasonic welding head can be fed from two ends to the center, namely, the ultrasonic welding head gradually moves from the offset area Z2 to the overlapping area Z1, thus the multi-layer tab sheets 320 in the first lamination portion 321 can be welded together; and the weld mark is also formed at a junction of the first lamination portion 321 and the second lamination portion 322, so that the multi-layer tab sheets 320 in the tab portion 32 can be simply and effectively connected together, which facilitates the subsequent utilization of the tab portion 32, for example, facilitating the assembly of the tab portion 32 and the terminal post 2, as well as facilitating the welding of the tab portion 32 and the terminal post 2 or the adapter plate.

In some embodiments of the present application, after the smaller ultrasonic welding head is adopted to feed and weld the tab portion 32 from two ends to the center, a larger ultrasonic welding head (such as a second welding head 3000 shown in FIG. 18) can be further adopted to integrally weld the tab portion 32 (in combination with FIG. 18), thus the welding compaction degree of the tab portion 32 can be improved, and further, the welding quality of the tab portion 32 and the terminal post 2 or the adapter plate is improved.

Or in other embodiments of the present application, when the smaller ultrasonic welding head is adopted to pre-weld the second lamination portion 322, the smaller ultrasonic welding head is not fed from two ends to the center, and then the larger ultrasonic welding head can be adopted to integrally weld the tab portion 32.

Or in other embodiments of the present application, the operation of operating the smaller ultrasonic welding head to pre-weld the second lamination portion 322 can be omitted, the larger ultrasonic welding head can be directly adopted to integrally weld the tab portion 32, and the like.

According to some embodiments of the present application, as shown in FIG. 3 to FIG. 5, a battery cell 102 is provided and includes: a case 1, the terminal post 2, and the electrode assembly 3 in any solution above; the terminal post 2 is arranged in the case 1; the active material coating portion 31 is accommodated in the case 1; and the tab portion 32 is electrically connected to the terminal post 2. For example, the tab portion 32 can be directly electrically connected to the terminal post 2 by welding, or the tab portion 32 can be indirectly and electrically connected to the terminal post 2 by an adapter plate, for example, the tab portion 32 is welded with one end of the adapter plate, and the other end of the adapter plate is welded with the terminal post 2.

Exemplarily, the tab portion 32 can be welded with the terminal post 2 by laser so as to realize direct electrical connection of the tab portion 32 and the terminal post 2. However, it is to be noted that the welding of the tab portion 32 and the terminal post 2 is not limited to laser welding, for example, the welding mode can be replaced by other modes, such as electric arc welding, plasma welding, and electron beam welding.

According to the battery cell 102 provided by this embodiment of the present application, through the electrode assembly 3 in any solution above, the electric connection area of the tab portion 32 and the terminal post 2 can be enlarged, thus improving the overcurrent capacity, as well as improving the overall processing efficiency of the battery cell 102.

According to some embodiments of the present application, as shown in FIG. 5, a connecting portion 4 is formed at the position, electrically connected to the terminal post 2, of the tab portion 32; and in combination with FIG. 20, the connecting portion 4 includes a part at the first lamination portion 321 and a part at the second lamination portion 322. For example, when the tab portion 32 and the terminal post 2 are directly welded, the formed weld mark forms the connecting part 4, a part of the connecting part 4 is in the first lamination portion 321, and the rest part is in the second lamination portion 322, so that the area of the connecting part 4 can be increased, the electric connection area of the tab portion 32 and the terminal post 2 is favorably increased, and the overcurrent efficiency is improved.

For another example, when the tab portion 32 is welded with the adapter plate, the formed weld mark forms the connecting part 4, a part of the connecting part 4 is in the first lamination portion 321, and the rest part is in the second lamination portion 322, so that the area of the connecting part 4 can be increased, the electric connection area of the tab portion 32 and the terminal post 2 is favorably increased, and the overcurrent efficiency is improved..

According to some embodiments of the present application, as shown in FIG. 5, the terminal post 2 is provided with an accommodating groove 21, and at least part of the tab portion 32 is accommodated in the accommodating groove 21. Therefore, at least part of the tab portion 32 is accommodated in the accommodating groove 21, and occupies the space in the accommodating groove 21, so that the space occupied by the tab portion 32 in the case 1 can be reduced, the space in the case 1 can be saved to accommodate the active material coating portion 31 which has a larger size, and therefore, the energy density of the battery cell 102 can be improved, or the size of the battery cell 102 can be reduced under the condition that the energy density of the battery cell 102 is not changed.

In some embodiments of the present application, as shown in FIG. 5, an accommodating cavity 11 is formed in the case 1; the accommodating groove 21 is open towards the direction far away from the accommodating cavity 11; a interconnecting hole 22 is formed in the terminal post 2, penetrates through the wall, close to one side of the accommodating cavity 11, of the accommodating groove 21, and communicates the accommodating cavity 11 with the accommodating groove 21; and the tab portion 32 is arranged in the interconnecting hole 22 in a penetrating manner. Therefore, when injecting an electrolyte solution into the battery cell 102, the electrolyte solution can be injected into the accommodating groove 21 and then flows towards the accommodating cavity 11 through the interconnecting hole 22, in which, the accommodating groove 21 can play a role in buffering the electrolyte solution so as to relive the problems of splashing, overflowing and the like of the electrolyte solution. Moreover, the side wall of the accommodating groove 21 (namely the groove wall extending from the opening of the accommodating groove 21 to the accommodating cavity 11) can prevent the electrolyte solution from splashing to a certain extent, thus reducing the pollution of the electrolyte to the outside, and facilitating quick injection of the electrolyte solution. Moreover, it is not needed to independently form a liquid injection channel in the case 1, so that it is not needed to specifically process the case 1, which is conducive to reducing the structural complexity and the processing difficulty of the case 1.

It is to be noted that there may be one or more interconnecting holes 22, and the tab portion 32 can be arranged in at least one interconnecting hole 22 in a penetrating manner. Exemplarily, the electrolyte solution can flow through at least one interconnecting hole 22, for example, at least one interconnecting hole 22 is vacant (namely the tab portion 32 is not arranged in a penetrating manner), so that the electrolyte solution can flow through the interconnecting hole 22 without being blocked by the tab portion 32, and for another example, the electrolyte solution can still pass through at least one interconnecting hole 22 after the tab portion 32 is arranged in a penetrating manner.

In some embodiments, as shown in FIG. 5, the tab portion 32 is welded with the terminal post 2 to realize electric connection, so that electrode output of the electrode assembly 3 from the terminal post 2 is realized. Exemplarily, as shown in the figure, when the accommodating groove 21 is open towards the direction far away from the accommodating cavity 11, the tab portion 32 is welded with the groove wall of the side, close to the accommodating cavity 11, of the accommodating groove 21, so that the matching compactness can be improved and the welding operation is facilitated. Definitely, the present application is not limited to above, in other embodiments, the tab portion 32 can also be arranged to be welded with a terminal post cover plate 5 described later to form electric connection, which is not limited herein.

In some embodiments of the present application, as shown in FIG. 5, the battery cell 102 further includes a terminal post cover plate 5 which covers the terminal post 2 so as to cover an opening of the accommodating groove 21; a liquid injection hole 51 communicating with the accommodating groove 21 is formed in the terminal post cover plate 5; and the battery cell 102 also includes a sealing structure 6 for sealing the liquid injection hole 51. Therefore, when it is needed to inject the electrolyte solution into the battery cell 102, the sealing structure 6 is not mounted at the liquid injection hole 51, or the sealing structure 6 is in a state of opening the liquid injection hole 51, and the electrolyte solution can be injected into the accommodating groove 21 through the liquid injection hole 51 at this moment. After the electrolyte solution is injected, the sealing structure 6 can be mounted at the liquid injection hole 51, or the sealing structure 6 is switched to a state of closing the liquid injection hole 51, so that the liquid injection hole 51 is sealed and closed to prevent the electrolyte solution from overflowing and prevent external foreign matters from entering the accommodating cavity 11 through the liquid injection hole 51, thereby improving the reliability of the battery cell 102. Therefore, the liquid injection hole 51 is processed in the terminal post cover plate 5, the opening hole is relatively small and the position is close to the outside, so that the liquid injection hole can be easily reliably sealed by the sealing structure 6, the working reliability of the battery cell 102 can be improved, and moreover, flexible and diversified design of the sealing structure 6 can be realized.

In some embodiments, as shown in FIG. 5, the terminal post cover plate 5 does not have a part stopped at the outer side (namely the side far away from the accommodating cavity 11) of the sealing structure 6 so that the sealing structure 6 is suitable for being mounted to the terminal post cover plate 5 from the outer side (namely the side far away from the accommodating cavity 11) of the terminal post cover plate 5, therefore, the sealing structure 6 is arranged to be mounted to the terminal post cover plate 5 from the outer side of the terminal post cover plate 5 to seal the liquid injection hole 51, so that the sealing structure 6 is mounted after liquid solution injection, and the sealing property of the liquid injection hole 51 can be ensured; and the mounting position is close to the outer side, which facilitates quick assembly of the sealing structure 6. Furthermore, the mounting of the sealing structure 6 does not cause adverse effects on the connection of the terminal post 2 and the terminal post cover plate 5, so that the connection reliability of the terminal post cover plate 5 and the terminal post 2 is ensured.

The sealing structure 6 can be in a detachable form or a non-detachable fixed form. Exemplarily, when the sealing structure 6 is in the dismountable form, the maintenance of the liquid injection hole 51 is facilitated, for example, when it is needed to supplement the electrolyte solution, the sealing structure 6 can be dismounted, the liquid injection hole 51 is opened, the electrolyte is injected into the accommodating cavity 11 by the liquid injection hole 51, and then the sealing structure 6 is mounted again, and for example, the sealing structure 6 can be detachably connected to the terminal post cover plate 5 in a threaded or rotary buckling manner, which facilitates dismounting and mounting.

Exemplarily, when the sealing structure 6 is in a non-dismountable fixed form, the sealing structure 6 can be fixed to the terminal post cover plate 5 by way of welding, riveting and the like, so that the sealing reliability of the sealing structure 6 to the liquid injection hole 51 is enhanced. For example, the liquid injection hole 51 can be in a multi-section form, and the sealing structure 6 can include a first sealing member in interference fit with the liquid injection hole 51, and a second sealing member which covers the first sealing part and is welded to the terminal post cover plate 5. Or, in some embodiments, the first sealing member can be removed and only the second sealing member is reserved. Or, in some embodiments, the second sealing member can be detachably connected to the terminal post cover plate 5 in a spinning manner, so that the first sealing member is limited in a position in interference fit with the liquid injection hole 51.

In some embodiments of the present application, as shown in FIG. 5, at least part of the sealing structure 6 is embedded into the liquid injection hole 51. That is, the sealing structure 6 can be fully embedded into the liquid injection hole 51, or only part of the sealing structure 6 can be embedded into the liquid injection hole 51. Therefore, on one hand, the space in the liquid injection hole 51 can be fully utilized to improve the sealing reliability of the sealing structure 6 to the liquid injection hole 51, and on the other hand, the height of the sealing structure 6 protruding out of the liquid injection hole 51 can be reduced, the space occupied by the sealing structure 6 outside the terminal post cover plate 5 is reduced, which is conducive to reducing the interference influence on a bus part 103, increasing the connecting area of the bus part 103 and the terminal post cover plate 5, and improving the overcurrent efficiency.

It is to be noted that there is no limitation to the arrangement position of the terminal post 2 on the case 1, for example, the case 1 can include a case body and a cover plate, the case body defines a space with one side opened, the cover plate is arranged on the open side of the case body so as to form an accommodating cavity 11 between the case body and the cover plate, at the moment, the surface of the side, opposite to the cover plate, of the case body is a first case wall, the wall surface, connected between the first case wall and the cover plate, of the case body is a second case wall, and at the moment, the terminal posts 2 can be arranged on the first case wall, or arranged on the second case wall, or arranged on the cover plate.

In addition, it is to be noted that the terminal post 2 of the positive electrode and the terminal post 2 of the negative electrode can be located on the same side surface of the case 1 and can be located on different side surfaces of the case 1 respectively, for example, the terminal post 2 of the positive electrode and the terminal post 2 of the negative electrode can be arranged on the cover plate at the same time, or, the terminal post 2 of the positive electrode and the terminal post 2 of the negative electrode can be arranged on the first case wall at the same time, or, one of the terminal post 2 of the positive electrode and the terminal post 2 of the negative electrode is arranged on the cover plate, and the other one is arranged on the first case wall.

According to the embodiment of the present application, as shown in FIG. 2, a battery 100 is provided and includes battery cell 102 in any solution above. It is to be noted that the battery 100 provided by this embodiment of the present application may include a box body 101 or may not include the box body 101. Therefore, the performance of the battery cell 102 provided by this embodiment of the present application is improved, so that the performance of the battery 100 is improved.

Exemplarily, as shown in FIG. 23, the battery 100 can also include a bus part 103; there are a plurality of battery cells 102, in which, at least two are electrically connected through the bus part 103. Therefore, series connection and/or parallel connection of the plurality of battery cells 102 can be achieved. For example, when the plurality of battery cells 102 are connected in series, the terminal post cover plate 5 of the positive electrode of one battery cell 102 is connected to the terminal post cover plate 5 of the negative electrode of the next battery cell 102 through one bus part 103, and meanwhile, the terminal post cover plate 5 of the negative electrode of the battery cell 102 is connected to the terminal post cover plate 5 of the positive electrode of the previous battery cell 102 by another bus part 103.

According to the embodiment of the present application, an electrical apparatus is also provided and includes the battery 100 in any solution above, and the battery 100 is configured to provide electric energy for the electrical apparatus. The electrical apparatus can be any device or system employing the battery 100. The performance of the battery 100 is improved, so that the working power utilization performance of the electrical apparatus is favorably improved.

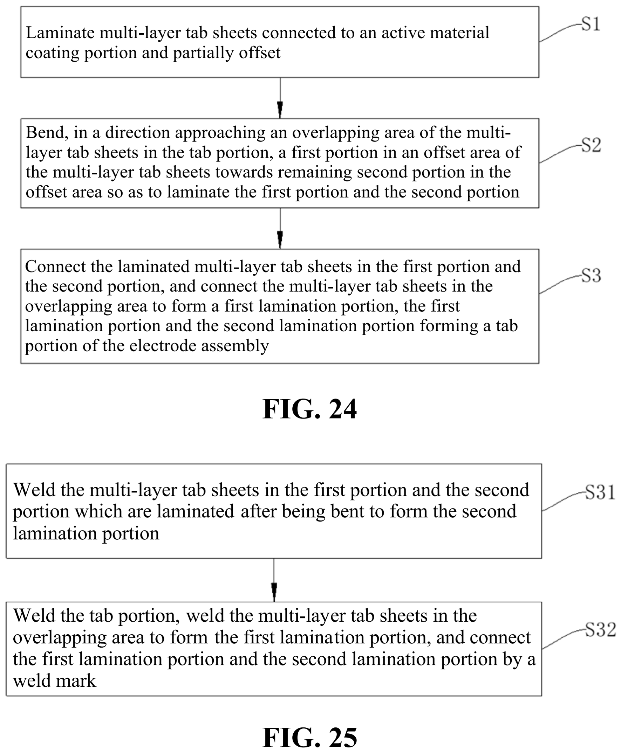

In some embodiments of the present application, a processing method for an electrode assembly 3 is also provided; and in combination with FIG. 24, the processing method includes steps S1, S2 and S3, in which, step S1 includes: laminating multi-layer tab sheets 320 connected to an active material coating portion 31 and partially offsetting; step S2 includes: bending, in a direction approaching an overlapping area Z1 of the multi-layer tab sheets 320 in the tab portion 32, a first portion 3221 in an offset area Z2 of the multi-layer tab sheet 320 towards remaining second portion 3222 in the offset area Z2 so as to laminate the first portion 3221 and the second portion 3222; and step S3 includes: connecting the laminated multi-layer tab sheets 320 in the first portion 3221 and the second portion 3222 to form a second lamination portion 322, and connecting the multi-layer tab sheets 320 in the overlapping area Z1 to form a first lamination part 321, the first lamination portion 321 and the second lamination portion 322 forming a tab portion 32 of the electrode assembly 3.

The tab portion 32 is composed of the laminated multi-layer tab sheets 320, the part in which the projections of the multi-layer tab sheets 320 are completely overlapped forms the first lamination portion 321; the part in which the projections of the multi-layer tab sheets 320 are not completely overlapped forms the second lamination portion 322; and at least one layer of tab sheet 320 includes a part belonging to the first lamination portion 321 and a part belonging to the second lamination portion 322, so that the first lamination portion 321 and the second lamination portion 322 are connected.

In combination with FIG. 10 and FIG. 11, due to the influence of factors such as manufacturing mode and manufacturing tolerance, it is difficult to align the laminated multi-layer tab sheets 320, causing the phenomenon of edge offsetting, therefore, on a projection plane vertical to a thickness direction W of the tab sheets 320, an area in which the projections of the multi-layer tab sheets 320 are completely overlapped is set as the overlapping area Z1, and an area in which the projections of the multi-layer tab sheets 320 are not completely overlapped is set as the offset area Z2.

In combination with FIG. 12 and FIG. 13, the offset area Z2 is divided into a first area Z21 and a second area Z22; the tab sheet 320 in the first area Z21 forms the first portion 3221, and the tab sheet 320 in the second area Z22 forms the second portion 3222; and in combination with FIG. 14 to FIG. 16, the tab sheet 320 in the offset area Z2 is bent, so as to laminate the first portion 3221 on the second portion 3222. In combination with FIG. 17, the multi-layer tab sheets 320 laminated in the first portion 3221 and the second portion 3222 are connected to obtain the second lamination portion 322. In combination with FIG. 18, the multi-layer tab sheets 320 laminated in the overlapping area Z1 are connected to obtain the first lamination portion 321.

The offset area Z2 of the multi-layer tab sheets 320 is bent, laminated and connected, which achieves recycling of the offset area Z2, and relieves adverse effect of the offset area Z2 of the multi-layer tab sheets 320 on the subsequent assembling of the tab portion 32 and subsequent welding of the tab portion 32 and the terminal post 2. Compared with the mode of completely cutting off the offset area Z2, this mode is to increase the ultrasonic pre-welding area of the tab portion 32, which increases area of the weld mark of the tab portion 32 and the terminal post 2, thereby improving the overcurrent capability, and improving the charging and discharging efficiency of the battery cell 102. Moreover, it is not needed to cut off the offset area Z2 of the tab portion 32 by the cutter, so the time for adjusting the cutter in the cutting process is saved; and moreover, it is not needed to introduce the process of adjusting the cutter for synchronous cutting of the plurality of tab portions 32 of the electrode assembly 3, so the production takt and the production efficiency of the electrode assembly 3 is favorably accelerated. In addition, the offset area Z2 of the multi-layer tab sheet 320 is reused, so that material waste is reduced and the material utilization rate of the tab portion 32 is improved.

In some embodiments of the present application, as shown in FIG. 25, the processing method for the electrode assembly 3 further includes a step S31 of: welding the multi-layer tab sheets 320 in the first portion 3221 and the second portion 3222 which are laminated after being bent to form the second lamination portion 322. For example, as shown in FIG. 17, after the offset area Z2 is bent, a smaller ultrasonic welding head can be adopted to compact the offset area Z2, so that the multi-layer tab sheets 320 in the second lamination portion 322 can be simply and effectively connected together, which facilitates subsequent processing or utilization of the tab portion 32, for example, facilitating subsequent overall welding of the tab portion 32, for another example, facilitating assembling of the tab portion 32 and the terminal post 2, as well as facilitating welding of the tab portion 32 and the terminal post 2 or the adapter plate. Definitely, the welding of the multi-layer tab sheets 320 in the second lamination portion 322 is not limited to the ultrasonic welding mode, for example, the welding mode can be replaced by other modes, such as molecular diffusion welding and resistance welding.

In some embodiments of the present application, as shown in FIG. 25, the processing method for the electrode assembly 3 further includes a step S32 of: welding the tab portion 32, welding the multi-layer tab sheets 320 in the overlapping area Z1 to form the first lamination portion 321, and connecting the first lamination portion 321 and the second lamination portion 322 by welding. Therefore, the tab sheets 320 of the first lamination portion 321 and the second lamination portion 322 are connected by the weld marks, which makes the tab portion 32 better in structural stability, thus facilitating the subsequent utilization of the tab portion 32, for example, facilitating the assembling of the tab portion 32 and the terminal post 2, as well as facilitating the welding of the tab portion 32 and the terminal post 2 or the adapter plate.

Exemplarily, as shown in FIG. 17, when a small ultrasonic welding head is adopted to compact the offset area Z2, the ultrasonic welding head can be fed from two ends to the center, namely, the ultrasonic welding head gradually moves from the offset area Z2 to the overlapping area Z1, thus the multi-layer tab sheets 320 in the first lamination portion 321 can be welded together; and weld mark is also formed at the junction of the first lamination portion 321 and the second lamination portion 322, so that the multi-layer tab sheets 320 in the tab portion 32 can be simply and effectively connected together, which facilitates the subsequent utilization of the tab portion 32, for example, facilitating the assembly of the tab portion 32 and the terminal post 2, as well as facilitating the welding of the tab portion 32 and the terminal post 2 or the adapter plate. Definitely, the welding of the multi-layer tab sheets 320 in the tab portion 32 is not limited to the ultrasonic welding mode, for example, the welding mode can also be substituted by other modes, such as molecular diffusion welding and resistance welding.

Exemplarily, after a relatively small ultrasonic welding head is fed from two ends to the center to weld the tab portion 32, a relatively large ultrasonic welding head can also be further adopted to weld the tab portion 32 (in combination with FIG. 18), namely, the relatively large ultrasonic welding head covers the first lamination portion 321 and the second lamination portion 322, so that the multi-layer tab sheets 320 in the first lamination portion 321 can be more reliably welded together, the weld mark at the junction of the first lamination portion 321 and the second lamination portion 322 is also firmer, the welding compaction degree of the tab portion 32 can be improved, and the welding quality of the tab portion 32 and the terminal post 2 or the adapter plate is improved.

Or, exemplarily, a relatively small ultrasonic welding head can be adopted to only pre-weld the a second lamination portion 322, and then a relatively large ultrasonic welding head is adopted to integrally weld the tab portion 32, namely, the relatively large ultrasonic welding head covers the first lamination portion 321 and the second lamination portion 322, so that the multi-layer tab sheets 320 in the overlapping area Z1 are welded to form the first lamination portion 321; and the multi-layer tab sheets 320 in the first lamination portion 321 are connected to the multi-layer tab sheets 320 in the second lamination portion 322 by the weld mark.

Or, in other embodiments of the present application, the step of pre-welding the second lamination portion 322 by the relatively small ultrasonic welding head can also be omitted, and the tab portion 32 is directly integrally welded by the relatively large ultrasonic welding head, so that the relatively large ultrasonic welding head covers the first lamination portion 321 and the second lamination portion 322, the multi-layer tab sheets 320 in the first portion 3221 and the second portion 3222 which are laminated are welded to form the second lamination portion 322, the multi-layer tab sheets 320 in the overlapping area Z1 are welded to form the first lamination portion 321, and the multi-layer tab sheets 320 in the first lamination portion 321 are connected to the multi-layer tab sheets 320 in the second lamination portion 322 by the weld mark.

The processing method for the electrode assembly 3 is described below by a specific embodiment of the present application.

As shown in FIG. 10 and FIG. 11, the positive electrode plate, the separator 312 and the negative electrode plate are sequentially laminated and wound to obtain the active substance coated part 31 and the tab portion 32 which extends out from the first end portion 310 of the active substance coated part 31; and the tab portion 32 includes the multi-layer tab sheets 320 which are laminated. The overlapping area Z1 and the offset area Z2 of the multi-layer tab sheets 320 in the tab portion 32 are identified by a CCD (charge coupled device) visual detection system.

In combination with FIG. 12 and FIG. 13, a cutting starting point P and a cutting path L2 of the tab portion 32 are determined; the cutting path L2 keeps a distance (such as a distance h marked in FIG. 12) of about 1 mm from the lower edge (namely the edge of the side close to the active material coating portion 31) of the tab sheet 320; and in the length direction of the first end portion 310, the length of the cutting path L2 is half of the length of the offset area Z2 (such as the length W/2 marked in FIG. 13). A cutter 4000 is fed according to the determined cutting path L2 and cuts the root part of the offset area Z2 of the multi-layer tab sheets 320 so as to obtain a notch 3224. The broken line L1 is determined and is set to be parallel to the outer edge 3201 of the tab sheet 320; and the lower end (namely the end portion close to the active material coating portion 31) of the broken line L1 is intersected with the end point of the notch 3224.

In combination with FIG. 14 and FIG. 15, the parts of the offset area Z2 on two sides of the broken line L1 are respectively a first area Z21 and a second area Z22; the tab sheet 320 of the first area Z21 is turned over along the broken line L1, so that the tab sheet 320 of the first area Z21 and the tab sheet 320 of the second area Z22 are laminated, that is, the bent part and the unbent part in the offset area Z2 are overlapped; and in combination with FIG. 16, the thickness of the second lamination portion 322 formed after lamination is uniform. In combination with FIG. 13 and FIG. 14, when the tab sheet 320 is trapezoidal, the first area Z21 and the second area Z22 are both parallelograms, the bent first area Z21 cannot be completely overlapped with the second area Z22, the upper end of the first area Z21 is downwards lower than the upper end of the second area Z22, namely the upper end is offset; and the lower end of the first area Z21 is downwards lower than the lower end of the second area Z22, namely, the lower end is offset. In order to avoid excessive offset of the upper end to influence the subsequent welding of the tab portion 32 and the terminal post 2, the height difference h between the upper end of the first area Z21 and the upper end of the second area Z22 can be set to be not greater than 2 mm; and in order to avoid excessive offset of the lower end to cause inverted insertion of the bent tab sheet 320 into the active material coating portion 31, the part (such as the area of the shadow Q shown in FIG. 14) of the tab sheet 320, which is located at the lower end of the first area Z21 and is lower than the lower end of the second area Z22, is cut off.

In combination with FIG. 17 and FIG. 18, after the offset area Z2 is bent, a smaller first welding head 2000 is firstly adopted to feed from two sides to the center and move to the overlapping area Z1, the multi-layer tab sheets 320 laminated after the offset area Z2 is bent are compacted and welded, and then a larger second welding head 3000 is adopted to compact and weld the junction of the first lamination part 321 and the second lamination part 322 and the multi-layer tab sheets 320 in the first lamination part 321. Then, in combination with FIG. 5 and FIG. 20, the tab portion 32 and the terminal post 2 after ultrasonic welding are welded together by a laser welding mode, and a formed weld mark, as the connecting part 4 marked in FIG. 20, not only includes the part in the first lamination part 321, but also includes the part in the second lamination part 322, which obviously increases the laser welding area of the tab portion 32 and the terminal post 2; and it is conducive to improving the overcurrent efficiency, thereby improving the performance of the battery cell 102.

It is to be noted that, without conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. An electrode assembly, comprising:
an active material coating portion; and
a tab portion connected to the active material coating portion, the tab portion comprising a first lamination portion and a second lamination portion which are arranged in a connection manner, wherein the first lamination portion is formed by connecting an overlapping area of laminated multi-layer tab sheets; and the second lamination portion is formed by bending, in a direction approaching the first lamination portion, a first portion in an offset area of the laminated multi-layer tab sheets towards a remaining second portion, and then laminating and connecting same together.

2. The electrode assembly according to claim 1, wherein a crease of the second lamination portion is parallel to an outer edge of the corresponding side of the tab sheets.

3. The electrode assembly according to claim 1 or 2, wherein the tab portion is formed into a trapezoidal structure of which a lower bottom is connected to the active material coating portion.

4. The electrode assembly according to claim 3, wherein an edge, close to the active material coating portion, of the first portion is a first edge; an edge, close to the active material coating portion, of the second portion is a second edge; a height difference is formed between the first edge and the second edge; and the first edge is located on the side, far away from the active material coating portion, of the second edge.

5. The electrode assembly according to claim 4, wherein the height difference between the first edge and the second edge is 0.8-3 mm.

6. The electrode assembly according to any one of claims 3 to 5, wherein the maximum height difference between a third edge, far away from the active material coating portion, of the first portion and a fourth edge, far away from the active material coating portion, of the second portion does not exceed 2 mm.

7. The electrode assembly according to any one of claims 1 to 6, wherein the tab portion extends out of a first end portion of the active material coating portion; the first lamination portion and the second lamination portion are arranged along a length direction of the first end portion; and in the length direction of the first end portion, the first portion is as long as the second portion.

8. The electrode assembly according to any one of claims 1 to 7, wherein the second lamination portions are arranged on both sides of the first lamination portion.

9. The electrode assembly according to any one of claims 1 to 8, wherein a thickness of the second portion is in a decreasing trend along a direction far away from the first lamination portion, and a thickness of the first portion is in an increasing trend along a direction far away from the first lamination portion.

10. The electrode assembly according to claim 9, wherein the first portion is bent and laminated on one side of the second portion where the surface is in stepped change.

11. The electrode assembly according to any one of claims 1 to 10, wherein two outer-layer tab sheets in a thickness direction of the second lamination portion are arranged on the same layer with two outer-layer tab sheets in a thickness direction of the first lamination portion.

12. The electrode assembly according to any one of claims 1 to 11, wherein the bent parts of the bent multi-layer tab sheets in the second lamination portion and the unbent multi-layer tab sheets are arranged in a layer-by-layer corresponding manner.

13. The electrode assembly according to claim 12, wherein edges of two tab sheets arranged at the same layer in the second lamination portion are seamlessly spliced.

14. The electrode assembly according to any one of claims 1 to 13, wherein the multi-layer tab sheets of the first portion and the second portion are connected in a welding manner.

15. The electrode assembly according to any one of claims 1 to 14, wherein the multi-layer tab sheets in the tab portion are connected by weld marks, with part of the weld marks located at the first lamination portion and the rest at the second lamination portion.

16. A battery cell, comprising: a case, a terminal post, and the electrode assembly according to any one of claims 1 to 15, wherein the terminal post is arranged in the case; the active material coating portion is accommodated in the case; and the tab portion is electrically connected to the terminal post.

17. The battery cell according to claim 16, wherein a connecting portion is formed at a position, electrically connected to the terminal post, of the tab portion; and the connecting portion comprises a part at the first lamination portion and a part at the second lamination portion.

18. The battery cell according to claim 17, wherein an accommodating groove is formed in the terminal post; and at least part of the tab portion is accommodated in the accommodating groove.

19. The battery cell according to claim 18, wherein an accommodating cavity is formed in the case; the accommodating groove is opened towards a direction far away from the accommodating cavity; a interconnecting hole is formed in the terminal post, penetrates through the wall of the side, close to one side of the accommodating cavity, of the accommodating groove, and communicates the accommodating cavity with the accommodating groove; and the tab portion is arranged in the interconnecting hole in a penetrating manner.

20. The battery cell according to claim 19, further comprising a terminal post cover plate which covers the terminal post so as to cover an opening of the accommodating groove, wherein a liquid injection hole communicating with the accommodating groove is formed in the terminal post cover plate; and a sealing structure for sealing the liquid injection hole is arranged on the terminal post cover plate.

21. A battery, comprising the battery cell according to any one of claims 16 to 20.

22. An electrical apparatus, comprising the battery according to claim 21.

23. A processing method for an electrode assembly, comprising the following steps:
laminating multi-layer tab sheets connected to an active material coating portion and partially offsetting;
bending, in a direction approaching an overlapping area of the multi-layer tab sheets in a tab portion, a first portion in an offset area of the multi-layer tab sheets towards remaining second portion in the offset area so as to laminate the first portion and the second portion; and
connecting the laminated multi-layer tab sheets in the first portion and the second portion to form a second lamination portion, and connecting the multi-layer tab sheets in the overlapping area to form a first lamination portion, the first lamination portion and the second lamination portion forming the tab portion of the electrode assembly.

24. The processing method for an electrode assembly according to claim 23, further comprising a step of: welding the multi-layer tab sheets in the first portion and the second portion which are laminated after being bent to form the second lamination portion.

25. The processing method for an electrode assembly according to claim 23 or 24, further comprising a step of: welding the tab portion, welding the multi-layer tab sheets in the overlapping area to form the first lamination portion, and connecting the first lamination portion and the second lamination portion by a weld mark.
